# EUROPÄISCHE PATENTSCHRIFT

(11) **EP 1 610 046 B1**
(45) Veröffentlichungstag und Bekanntmachung des Hinweises auf die Patenterteilung: **13.06.2007**
(21) Anmeldenummer: 05012703.4
(22) Anmeldetag: 14.06.2005
(51) Int. Cl.: F16K 39/02

(54) **Ventilanordnung**
Valve device
Soupape

(30) Priorität: 21.06.2004 DE 102004029991
(43) Veröffentlichungstag der Anmeldung: 28.12.2005
(73) Patentinhaber: Karl Dungs GmbH & Co.KG, 73660 Urbach (DE)
(72) Erfinder: Moses, Johann, 73614 Schorndorf (DE)
(74) Vertreter: Rüger, Barthelt & Abel Patentanwälte

(56) Entgegenhaltungen:
- EP-A- 1 128 055
- EP-A- 1 278 011
- US-A1- 2002 083 982
- US-B1- 6 202 688

## Beschreibung

Die Erfindung betrifft eine Ventilanordnung zum Steuern eines Gasflusses.

Es ist bekannt, Gasflüsse durch Magnetventile zu steuern. Solche Magnetventile können beispielsweise der DE 101 07 194 C1 entnommen werden. Das dort beschriebene Gasventil weist einen Magnetantrieb auf, dessen Zuganker mit einem ersten Ventilverschlussglied verbunden ist. Dieses gehört zu einem Zündgasventil, dessen Ventilsitz an einem zweiten Ventilverschlussglied angeordnet ist. Letzteres sitzt mit Spiel auf der Ventilspindel und wird erst geöffnet wenn das Zündgasventil bereits offen ist und die Ventilspindel einen gewissen Weg durchlaufen hat. Das zweite Ventilverschlussglied wird durch eine Schließfeder in Schließstellung gehalten. Entsprechendes gilt für das erste Ventilverschlussglied.

Beim Öffnen des zweiten Ventilverschlussglieds lastet ein erheblicher Gasdruck auf ihm. Der Zuganker des Magnetantriebs muss in der Lage sein, die dadurch entstehende Zuhaltekraft des Ventils zu überwinden, um dieses zu öffnen. Dazu sind Magnetantriebe mit erheblicher Größe erforderlich. Die von dem Magnetantrieb aufzubringende Kraft ist dabei proportional zu dem Gasdruck und nimmt mit dem Quadrat des Durchmessers des Ventilverschlussglieds zu.

Aus der US-A-6 202 688 ist ein Hochdruckventil bekannt, das beispielsweise gasförmigen Kraftstoff zu einem Kraftfahrzeugmotor leiten und beim Starten des Kraftfahrzeugs unmittelbar öffnen soll. Dazu ist das Ventil nach Art eines Servoventils aufgebaut. Es zeigt eine von einem Magnetanker zu betätigende Ventilspindel auf, die ein kleines Druckentlastungsventil steuert. Der Ventilsitz desselben befindet sich in einem größeren Ventilverschlussglied eines koaxialen zweiten größeren Ventils, das von einem Kolben betätigt wird. Die von dem ersten Ventil verursachte Druckänderung schaltet das größere Ventil.

Die EP-A-1 278 011 offenbart darüber hinaus ein Servoventil mit einem Membranantrieb, dessen Membran mit einer Ventilspindel verbunden ist. Auf dieser sitzt mit axialem Spiel ein größeres Ventilverschlussglied. In diesem ist ein Ventilsitz für die Spitze der Ventilspindel ausgebildet, die somit ein kleineres Ventilverschlussglied bildet. Beim Öffnen des Ventils öffnen beide Ventile nacheinander. Zunächst lässt das kleinere Ventil einen beschränkten Gasfluss zu. Mit weiterer Fortbewegung der Ventilspindel wird auch das größere Ventilverschlussglied mitgenommen und somit ein größerer Gasfluss zugelassen.

Davon ausgehend ist es Aufgabe der Erfindung eine Ventilanordnung, zur Steuerung eines Gasflusses zu schaffen, wobei die Steuerung des Gasflusses mit verminderten Stellkräften ermöglicht werden soll.

Diese Aufgabe wird mit der Ventilanordnung nach Anspruch 1 gelöst.

Die erfindungsgemäße Ventilanordnung kann eine variable Drosseleinrichtung umfassen, die vor oder nach den beiden Ventilverschlussgliedern angeordnet ist. Im einfachsten Fall ist die Drosselanordnung durch einen Strömungswiderstand wie beispielsweise die Düsen eines Brenners gegeben. Die Drosselanordnung weist dabei vorzugsweise einen nicht linearen Strömungswiderstand auf, so dass bereits ein geringer Gasfluss ausreicht, um stromabwärts der Ventilanordnung einen Druckaufbau zu bewirken.

Bei einer verfeinerten Ausführungsform handelt es sich bei der Drosseleinrichtung um eine gesteuerte Drosseleinrichtung, wie beispielsweise ein Druckregelventil. Vorzugsweise ist dieses beschaffen und geschaltet, dass es bei geschlossener Ventilanordnung zunächst selbst weitgehend schließt, d.h. beispielsweise eine größtmögliche Drosselwirkung aufweist. Dies ermöglicht es, das erste Ventil mit besonders geringem Durchlassquerschnitt auszubilden, der dann schon zum Druckaufbau stromabwärts der Ventilanordnung ausreicht. Diese Konfiguration gestattet die Verwendung besonders leistungsarmer Antriebseinrichtungen.

Die Antriebseinrichtung ist vorzugsweise ein Zuganker-Magnetantrieb. Bei einer bevorzugten Ausführungsform weist dieser zumindest einen Polschuh auf, der der Kraft/Weg-Kennlinie eine Anfangskraftüberhöhung erteilt. Die Anfangskraftüberhöhung kann dazu genutzt werden, das erste kleinere Ventil zu öffnen. Die Anfangskraftüberhöhung kann dabei so groß sein, dass die Kraft/Weg-Kennlinie nach Durchlaufen des ersten Kraftmaximums eine negative Steigung, d.h. einen Kraftabfall, aufweist. Dennoch reicht die Zugkraft eines solches Magnetantriebs dann zum Öffnen des zweiten Ventilverschlussglieds, sofern dieses durch das Öffnen des ersten Ventils im Wesentlichen drucklos gemacht worden ist. Außerdem kann die dem Anker innewohnende kinetische Energie dazu genutzt werden, das noch auf seinen Ventilsitz ruhende zweite Ventilverschlussglied zu beschleunigen, von dem Ventilsitz zu lösen und mitzunehmen.

Vorzugsweise ist der die Anfangskraftüberhöhung bewirkende Polschuh mit einer Rippe versehen, die mit einer an dem Anker ausgebildeten, in seinem Mantel eingebrachten Nut zusammenwirkt. Die Nut steht in Ruheposition des Ankers, d.h. bei geschlossenem Ventil, in unmittelbarer Nachbarschaft zu der Rippe. Entsprechend kann auch der Anker mit einer radial nach außen weisenden Rippe versehen sein, die mit der erstgenannten Rippe zur Ausbildung der Anfangskraftüberhöhung wechselwirkt. Beim Anziehen des Ankers laufen die Rippen aneinander vorbei.

Bevorzugte Ausführungsformen nutzen für beide Ventile glatte Ventilsitze, was den Strömungswiderstand des offenen Ventils minimiert. Weiterhin trägt zur Minimierung des Strömungswiderstands bei, dass die Durchgangsöffnung des ersten Ventils zentral in einem Strömungskörper ausgebildet ist, der sich in die Durchgangsöffnung des zweiten Ventilsitzes hinein erstreckt und einen ungefähr konischen oder abgerundet konischen Mantel aufweist.

Den Ventilen der Ventilanordnung sind Schließfedern zugeordnet. Vorzugsweise stützen sich beiden Schließfedern mit einem Ende an dem Gehäuse und mit dem anderen Ende an dem betreffenden Ventilverschlussglied oder einem fest mit diesem verbundenen Bauteil ab. Z.B. kann sich die Schließfeder des ersten Ventilverschlussglieds an dem Anker abstützen. Die Schließfeder des zweiten Ventilverschlussglieds kann sich unmittelbar an demselben abstützen. Die Schließfeder des ersten Ventilverschlussglieds kann erheblich schwächer ausfallen als die des zweiten Ventilverschlussglieds. Aufgrund der im Vergleich zu der Stirnfläche des zweiten Ventilverschlussglieds wesentlich geringeren Stirnfläche des ersten Ventilverschlussglieds genügt die schwächere erste Schließfeder, um mit diesem Ventil eine hohe Sicherheit zu erreichen. Selbst bei relativ geringen Schließfederkräften können A-Ventilqualitäten erreicht werden. Die zweite Schließfeder ist etwas stärker ausgebildet, so dass auch das zweite Ventil eine A-Ventilqualität haben kann. Die Kraft der zweiten Schließfeder kann der relativ schwache Magnetantrieb ohne größere Schwierigkeiten überwinden, weil er schon einen Teil seines Wegs durchlaufen hat wenn er beginnt, das zweite Ventil zu öffnen. Der Luftspalt zwischen dem Anker und dem zugeordneten Polstück ist hier schon so gering, dass der kleine Magnetantrieb eine hohe Kraft aufbringen kann.

Bei einer ebenfalls eine hohe Sicherheit aufweisenden Ausführungsform ist dem ersten Ventilverschlussglied noch eine Notdichtfläche zugeordnet, die an einem Metallkörper ausgebildet ist. Sie dient zur Sicherstellung einer näherungsweisen Dichtigkeit beim Versagen der Dichtung des ersten Ventils, beispielsweise in Folge von Brandeinwirkung.

Auch dem zweiten Ventilverschlussglied kann eine solche Notdichtfläche zugeordnet sein. Diese kann beispielsweise durch einen sich in radialer Richtung erstreckenden Flansch gebildet sein, der hinter der vorzugsweise als federnden Dichtlippe ausgebildeten Dichtung des zweiten Ventilverschlussglieds angeordnet sein kann.

Eine baulich einfache und fertigungsfreundliche Ventilanordnung wird erhalten, wenn das erste Ventilverschlussglied mit dem zweiten Ventilverschlussglied über eine Rastverbindung verbunden ist. Zur Montage muss auf das erste Ventilverschlussglied dann lediglich ein entsprechender Körper aufgesteckt werden, an dem sowohl der erste Ventilsitz als auch das zweite Ventilverschlussglied ausgebildet sind.

Weitere Einzelheiten vorteilhafter Ausführungsformen der Erfindung ergeben sich aus der Zeichnung, der Beschreibung oder aus Ansprüchen.

In der Zeichnung sind Ausführungsbeispiele der Erfindung veranschaulicht. Es zeigen:
- Figur 1: eine erfindungsgemäße Ventilanordnung in schematisierter Darstellung,
- Figur 2: einen Magnetantrieb für die Ventilanordnung nach Figur 1 in schematisierter längs geschnittener Darstellung,
- Figur 3: eine Ventilanordnung mit erstem und zweiten Ventil in schematisierter längs geschnittener und ausschnittsweiser Darstellung,
- Figur 4: die Ventilanordnung nach Figur 3 in einer abstrahierten und ausschnittsweisen Schnittdarstellung,
- Figur 5: den Ventilsitz und das Ventilverschlussglied des ersten Ventils der Ventilanordnung in ausschnittsweiser Schnittdarstellung,
- Figur 6: eine abgewandelte Ausführungsform des ersten Ventils in ausschnittsweiser Darstellung,
- Figur 7: die Dichtung und den Ventilsitz des zweiten Ventils nach Figur 6 in ausschnittsweiser schematisierter Darstellung und
- Figur 8: einen beispielhaften Kraft/Weg-Kennlinienverlauf für den Magnetantrieb nach Figur 2.

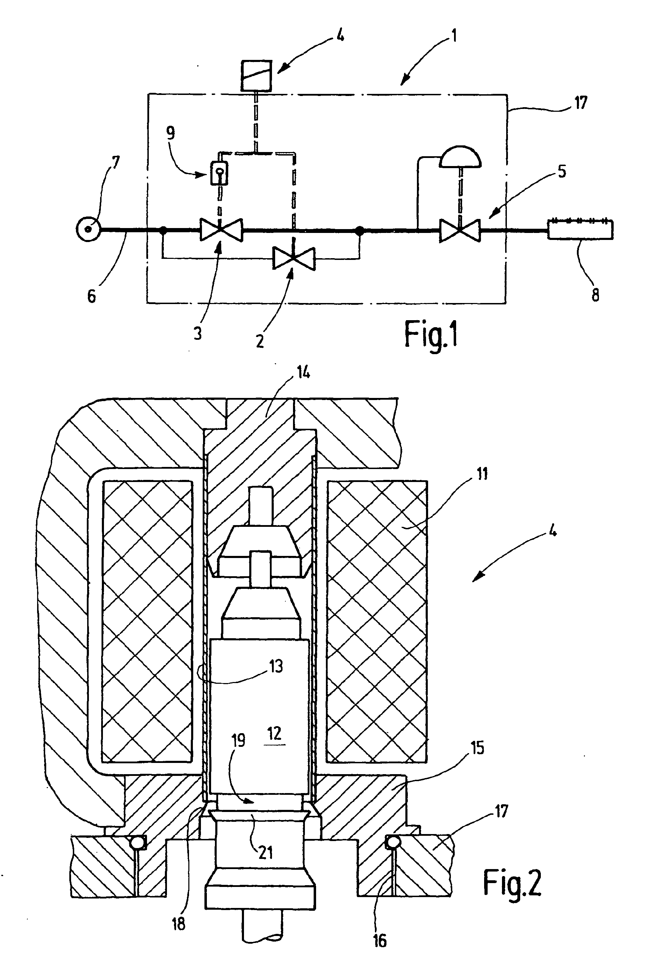

In Figur 1 ist eine Ventilanordnung 1 veranschaulicht, zu der ein erstes Ventil 2, ein zweites Ventil 3, eine zugeordnete Antriebseinrichtung 4 sowie beispielsweise ein Druckregler 5 gehören. Die Ventilanordnung 1 dient dazu, den Gasfluss in einer Leitung 6 auf dem Weg von einer Quelle 7 zu einem Verbraucher, beispielsweise einem Brenner 8, abzusperren oder wahlweise freizugeben.

Das erste Ventil 2 und das zweite Ventil 3 sind zu einander parallel geschaltet, wobei das Ventil 2 vorzugsweise für einen deutlich geringeren Durchlass ausgelegt ist als das zweite Ventil 3. Die Antriebseinrichtung 4 betätigt vorzugsweise beide Ventile 2, 3 nacheinander. Dazu ist sie mit dem ersten Ventil 2 vorzugsweise spielarm oder spielfrei und mit dem zweiten Ventil 3 spielbehaftet verbunden. Das Spiel ist in Figur 1 schematisch durch eine so genannte Getriebelose 9 angedeutet. Das erste Ventil lässt sich aufgrund seiner Kleinheit gut mit geringer Kraft öffnen. Es dient dazu, den Druckabfall über dem zweiten Ventil 3 zu vermindern oder zu beseitigen, so dass die relativ schwache Antriebseinrichtung 4 dann auch das zweite Ventil 3 öffnen kann. Dies erfolgt vorzugsweise bei noch geschlossenem Druckregler 5. Dieser kann so ausgebildet sein, dass er von sich aus bei fehlendem Eingangsdruck im Wesentlichen geschlossen ist. Alternativ kann er auch von einer nicht weiter veranschaulichten Steuereinrichtung betätigt sein, die auch die Antriebseinrichtung 4 betätigt und dafür sorgt, dass der Druckregler 5 geschlossen ist, bevor die Antriebseinrichtung 4 angesteuert wird.

Die Antriebseinrichtung 4 ist gesondert in Figur 2 veranschaulicht. Sie beruht auf einem Magnetspulenantrieb, zu dem eine Magnetspule 11 und ein zugeordneter Anker 12 gehören. Der Anker 12 ist in einer vorzugsweise nicht magnetischen Hülse 13, beispielsweise einer Edelstahlhülse, axial verschiebbar gelagert, die an ihrem oberen Ende gasdicht mit einem Polstück 14 verbunden ist. Das Polstück 14 weist an ihrer dem Anker 12 zugewandten Seite eine entsprechende Profilierung auf, um insbesondere in den letzten Abschnitten des Anzugwegs des Ankers einen gewünschten Kennlinienverlauf zu erzielen.

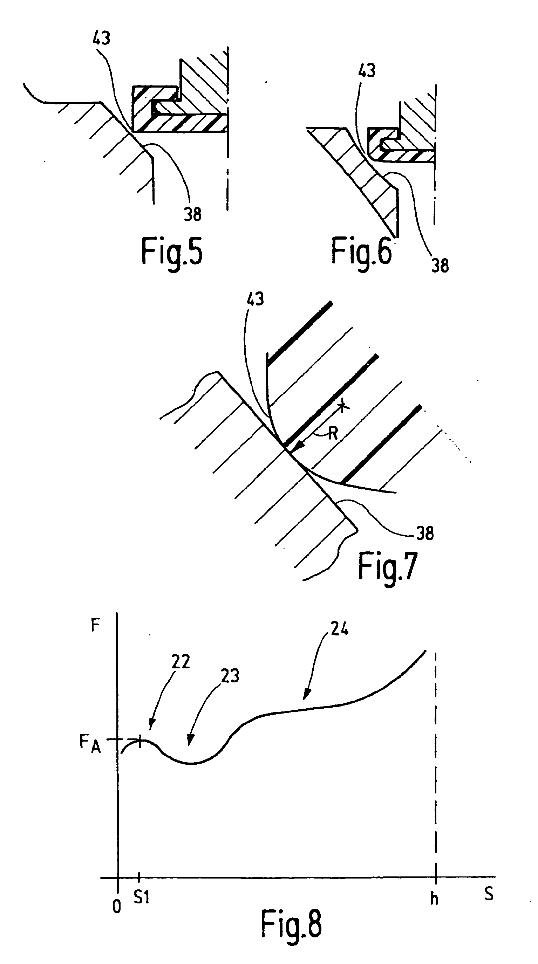

An dem unteren Ende der Hülse 13 ist ein unteres Polstück gasdicht befestigt, das z.B. einen mit Außengewinde 16 versehenen Fortsatz zum Einschrauben in ein Ventilgehäuse 17 aufweisen kann. Das Polstück 15 weist zur entsprechenden Formung der Kraft/Weg-Kennlinie des Magnetantriebs eine radial nach innen gerichtete Rippe 18 auf, die beispielsweise den unteren Stirnrand der Hülse 13 untergreift. Diese Rippe wirkt mit einer in der Mantelfläche des Ankers 12 vorgesehenen Nut 19 sowie einer sich an die Nut 19 anschließenden Rippe 21 zusammen, die bei geschlossenem Ventil etwas unterhalb der Rippe'18 steht. Sie ist dazu vorgesehen, ein erhöhtes Anzugmoment aus der Ruhestellung heraus zu erzeugen, die der Ventilgeschlossen-Stellung entspricht. Die sich ergebende Kraft/Weg-Kennlinie ist in Figur 8 qualitativ veranschaulicht. Die Kennlinie weist eine relativ hohe Anfangskraft F_{A} zu Anfang des Wegs des Ankers sowie bei sehr geringen zurückgelegten Wegen, wie beispielsweise dem Weg s1 auf. Diese Kraft kann zum Öffnen des kleineren ersten Ventils 2 genutzt werden. An diesen Höcker 22 der Kraft/Weg-Kennlinie kann sich ein Kennlinienabschnitt 23 anschließen, in dem die Kennlinie zunächst abfällt. An diesen fallenden Kennlinienabschnitt mit negativer Steigung kann sich dann wiederum ein Abschnitt 24 mit erhöhter Zugkraft anschließen. Diese wird nun vor allem durch Wechselwirkung der oberen Stirnseite des Ankers 12 mit dem Polstück 14 gebildet. Der hier vorhandene Luftspalt nimmt mit zunehmendem Hub des Ankers 12 ab, wodurch die Kraft F ansteigen kann. Dieser weitere Abschnitt 24 kann zum Öffnen des zweiten Ventils 3 genutzt werden.

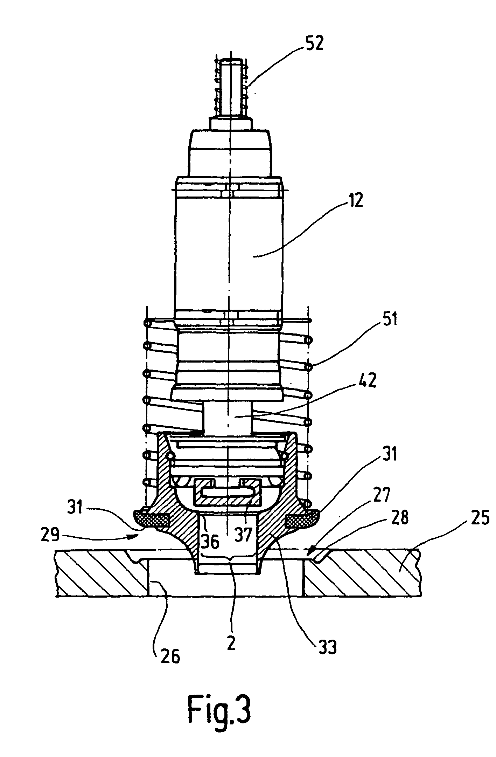

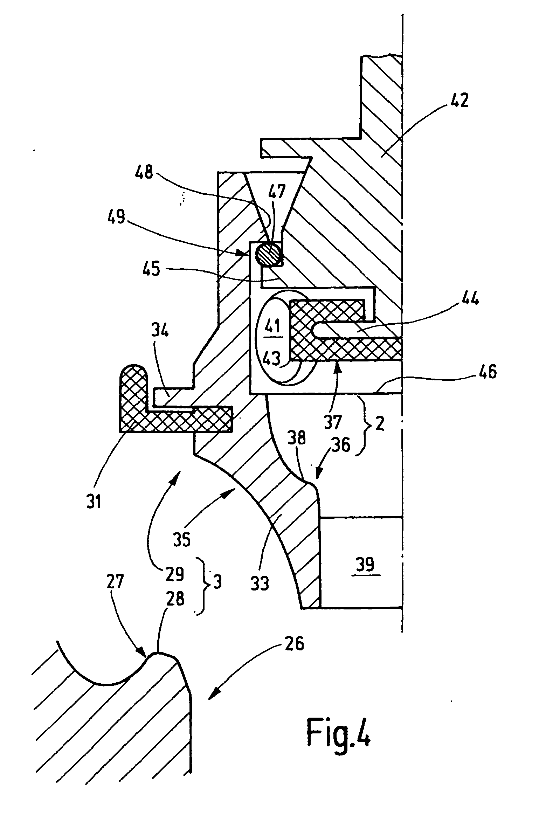

Die Ausbildung der Ventile 2 und 3 geht z.B. aus den Figuren 3 und 4 hervor. Sie sind vorzugsweise beide in einem gemeinensamen Gehäuse z.B. dem Ventilgehäuse 17 angeordnet, das in Figur 2 lediglich sehr ausschnittsweise und in Figur 1 nur sehr schematisch angedeutet ist. Es weist eine Zwischenwand 25 auf, die in Figur 3 veranschaulicht und mit einer Durchgangsöffnung 26 versehen ist. Deren Berandung, insbesondere eine ringförmige sie umgebende Planfläche 27 oder Rippe, bildet einen Ventilsitz 28, der im Weiteren als "zweiter Ventilsitz" bezeichnet wird. Diesem ist ein zweites Ventilverschlussglied 29 zugeordnet, das in Form einer Elastomerdichtung 31 vorliegt. Diese ist als ringförmige Lippendichtung mit planer Unterseite 32 ausgebildet. Sie erstreckt sich radial von einem Trägerkörper 33 weg. Dieser ist mit einem Flansch 34 versehen, der insbesondere aus Figur 4 hervorgeht und in einem geringen Spaltabstand hinter der Elastomerdichtung 31 steht. Er bildet zum einen ein festes Widerlager für die relativ weiche Elastomerdichtung 31 und zum anderen eine Notdichtfläche, die im Brandfall, wenn die Elastomerdichtung 31 zerstört sein sollte, auf dem Ventilsitz 28 aufsitzt, um eine metallische Abdichtung zu liefern.

Der aus einem Metall, wie beispielsweise Aluminium, Stahl oder dergleichen, bestehende Trägerkörper 33 weist im Anschluss an die Elastomerdichtung 31 einen sich in die Durchgangsöffnung 26 hinein erstreckenden Stromleitfortsatz 35 auf, dessen Außenprofil so gestaltet ist, dass sich durch die Durchgangsöffnung 26 hindurch ein möglichst widerstandsarmer Fluss ergibt. Dazu ist auch die Durchgangsöffnung 26 weitgehend glatt. Der Ventilsitz 28 ist mit der Rippe 27 versehen, die, wie Figur 3 zeigt, in der Zwischenwand 25 versenkt angeordnet ist. Der Ventilsitz 28 ist somit für die Strömung wie der Stromleitfortsatz 35 im Wesentlichen glatt.

Der Ventilsitz 28 und das Ventilverschlussglied 29 bilden das zweite Ventil 3. Das erste Ventil 2 ist hingegen durch einen in dem Trägerkörper 33 ausgebildeten ersten Ventilsitz 36 und ein diesem zugeordnetes Ventilverschlussglied 37 gebildet. Der Ventilsitz 36 ("erster Ventilsitz") wird durch eine glatte z.B. ebene oder auch gewölbte Ringfläche 38 gebildet, die einen zentralen an dem Trägerkörper 33 ausgebildeten und sich durch den Stromleitfortsatz 35 erstreckenden Durchgang 39 umschließt. Der Durchmesser dieses Durchgangs 39 ist wesentlich geringer als der Durchmesser der Durchgangsöffnung 26. Das Durchmesserverhältnis liegt beispielsweise bei 1:2, vorzugsweise aber bei 1:3 oder 1:4 oder noch darunter.

Der Durchgang 39 ist strömungsgünstig geformt. Vorzugsweise sind im Bereich des Übergangs zwischen dem Ventilsitz 36 und dem Durchgang 39 keinerlei scharfe Kanten, Erhebungen oder ähnliches ausgebildet. Oberhalb des Flansches 34 erstreckt sich ein rohrförmiger Fortsatz nach oben, in dem vorzugsweise viele, wenigstens aber einige Gasdurchlassöffnungen 41 ausgebildet sind. Diese führen in den Innenraum des im Ganzen etwa rohrförmiger Trägerkörper 33. In diesen hinein erstreckt sich der äußerste Fortsatz einer Ventilspindel 42, die an ihrem unteren Ende spielarm oder spielfrei das Ventilverschlussglied 37 in Form einer Elastomerdichtung trägt. Diese weist an ihrer unteren, der Ringfläche 38 zugewandten Seite, eine im Wesentlichen ebene Stirnfläche auf, die bei einer scharfen oder gerundeten ringförmigen äußeren Kante 43 in eine zylindrische Außenfläche übergeht. Sie ist dann wiederum nach innen gewölbt, um einen pilzförmigen Fuß oder Kopf 44 der Ventilspindel 42 zu umschließen. Die so ausgebildete Elastomerdichtung sitzt mit geringem Spiel auf dem Kopf 44.

Oberhalb der Dichtung ist an der Ventilspindel 42 einen nach außen gerichtete Ringschulter 45 ausgebildet, deren plane Unterseite einer entgegen gerichteten, innen an dem Trägerkörper 33 ausgebildeten Ringschulter 46 zugeordnet ist. Die Ringschulter 45 kann auch als nach außen gerichteter radialer Flansch ausgebildet sein. Oberhalb desselben ist ein Sprengring 47 gelagert, der mit einer nach innen gerichteten Rastschulter 48 des nach oben gerichteten rohrförmigen Fortsatzes des Trägerkörpers 33 eine Rasteinrichtung 49 bildet. Diese dient zur Befestigung des Trägerkörpers 33 an der Ventilspindel 42 und zwar mit einem solchen Axialspiel, dass das Ventilverschlussglied 37 auf dem Ventilsitz 36 aufsitzen und von diesem abheben kann, um den Durchgang 39 großzügig freizugeben.

Die Ringfläche 38 kann alternativ gemäß Figur 5 als Konusfläche ausgebildet sein während die Kante 43 eine Kante mit geringem Rundungsradius ist. Es ist auch möglich, an Stelle der im Wesentlichen ebenen Ringfläche 38 (Figur 3 oder 4) eine gewölbte Ringfläche 38 als Ventilsitz vorzusehen, wie es Figur 6 veranschaulicht. Es wird eine sphärische Wölbung bevorzugt. Bei dieser Ausführungsform ist auch die Kante 43 gerundet. Wie Figur 7 veranschaulicht, kann die Rundung dabei relativ großzügig sein. Sie liegt vorzugsweise im Bereich von 0,1 mm bis 0,5 mm. Rundungsradien von 0,2 mm bis 0,3 mm wären bevorzugt.

Zum Schließen des zweiten Ventils 3 dient eine Schließfeder 51, die in Figur 3 angedeutet ist und die sich einen Ends an dem Ventilgehäuse und anderen Ends an dem Trägerkörper 33 abstützt. Eine dem ersten Ventil 2 zugeordnete Schließfeder 52 kann sich beispielsweise mit einem Ende an dem Anker 12 und mit ihrem anderen Ende an dem Polstück 14 abstützen. Andere Anordnungen sind möglich.

Die insoweit beschriebene Ventilanordnung 1 arbeitet wie folgt:

Ist die Ventilanordnung 1 geschlossen wird davon ausgegangen, dass auch der Druckregler 5 geschlossen ist. Sollen die Ventile 2, 3 öffnen wird die Antriebseinrichtung 4 bestromt. Der Anker 12 erzeugt nun gemäß der Kennlinie nach Figur 8 zunächst ein erhöhtes Moment und öffnet dabei das Ventil 2 gegen die Kraft des auf dem Ventilverschlussglied 37 lastenden Gasdrucks und gegen die Kraft der relativ schwachen Schließfeder 52. Die Öffnung des Ventils 2 bewirkt nun einen Druckausgleich, denn es strömt Gas auf die Abströmseite des Ventilverschlussglieds 29. Die an diesem angreifende Druckdifferenz verringert sich somit beträchtlich. Der Anker kann somit, wenn er sich weiter bewegt und mit der Ringschulter 45 und dem Sprengring 47 (Figur 4) an der Rastschulter 48 anläuft, die Elastomerdichtung 31 von der Planfläche 27 abheben. Somit öffnet auch das zweite Ventil 3.

Sodann steht an dem Druckregler 5 der primäre Gasdruck an, so dass dieser öffnen und den gewünschten Gasdruck an dem Brenner 6 einregeln kann.

Entfällt der Druckregler 5 erzeugt der Brenner 8 einen genügenden Rückstau, um die Druckdifferenz nach dem Öffnen des Ventils 2 soweit absinken zu lassen, dass die schwach dimensionierte Antriebseinrichtung 4 auch das große Ventil 3 öffnen kann.

Bei einer Ventilanordnung, die mit besonders schwach und klein, d.h. leistungsarm, dimensionierten elektrischen Zugankerantrieben auskommen soll, dient ein erstes Ventil 2, das auf den ersten Millimetern des Ankerhubs des Magnetantriebs geöffnet wird, dazu, die an dem zweiten Ventil anstehende Druckdifferenz abzubauen. Das zweite Ventil bildet das Hauptventil, das auf den gewünschten Nenndurchsatz (Nenngasstrom) dimensioniert ist während das erste Ventil 2 keinesfalls in der Lage ist, diesen Gasstrom durchzulassen. Vielmehr ist es allenfalls auf einen geringen Teilgasstrom von z.B. einem Viertel oder einem Drittel des Nenngasstroms dimensioniert. Vorzugsweise ist es noch kleiner. Die Parallelschaltung der beiden Ventile 2 und 3 gestattet somit das Schalten relativ großer Gasströme mit kleinen Magnetantrieben.

## Patentansprüche

1. Ventilanordnung, insbesondere für Gasflüsse,
mit einem Ventilgehäuse (17), in dem ein erstes, kleineres Ventilverschlussglied (37) und ein zweites, größeres Ventilverschlussglied (29) angeordnet sind, die gemeinsam mit entsprechenden Ventilsitzen (36, 28) zueinander parallel wirkend angeordnete Ventile (2, 3) bilden,
mit einer Antriebseinrichtung (4), die mit dem ersten Ventilverschlussglied (37) spielfrei oder mit einem kleineren Spiel und mit dem zweiten Ventilverschlussglied (29) mit einem größeren Spiel verbunden ist, der dem Hub des ersten Ventilverschlussglieds (37) entspricht,
mit einer Schließfeder (51), die sich mit einem Ende an dem zweiten Ventilverschlussglied (29) abstützt,
**dadurch gekennzeichnet, dass**
die Antriebseinrichtung (4) ein Zuganker-Magnetantrieb ist, der einen Polschuh (15) aufweist, um der Kraft/Weg-Kennlinie eine Anfangskraftüberhöhung zu erteilen,
wobei der Polschuh (15) eine ringförmige, sich auf die Mantelfläche des Ankers (12) hin erstreckende Rippe (18) aufweist, der eine magnetisch wirksame ringförmige Ausnehmung (19) des Ankers (12) zugeordnet ist, und
wobei die Ausnehmung (19) bei geschlossenen Ventilverschlussgliedern (37, 29) in unmittelbarer Nachbarschaft der Rippe (18) angeordnet ist.

2. Ventilanordnung nach Anspruch 1, **dadurch gekennzeichnet, dass** zu der Ventilanordnung (1) eine variable Drosseleinrichtung (5) gehört, die den Ventilen (2, 3) nachgeordnet ist.

3. Ventilanordnung nach Anspruch 1, **dadurch gekennzeichnet, dass** die Drosseleinrichtung (5) mit einer Steuereinrichtung verbunden ist, die ein Öffnen der Drosseleinrichtung (5) erst nach dem Öffnen beider Ventile (2, 3) bewirkt.

4. Ventilanordnung nach Anspruch 1, **dadurch gekennzeichnet, dass** die Kraft/Weg-Kennlinie einen Abschnitt (23) mit negativer Steigung aufweist.

5. Ventilanordnung nach Anspruch 1, **dadurch gekennzeichnet, dass** die Ventilverschlussglieder (37, 29) zueinander koaxial angeordnet sind.

6. Ventilanordnung nach Anspruch 1, **dadurch gekennzeichnet, dass** der Ventilsitz (36) des ersten Ventils (2) an dem zweiten Ventilverschlussglied (29) angeordnet ist.

7. Ventilanordnung nach Anspruch 1, **dadurch gekennzeichnet, dass** der Durchmesser des ersten Ventilverschlussgliedes (27) geringer ist als die Hälfte des Durchmessers des zweiten Ventilverschlussgliedes (29).

8. Ventilanordnung nach Anspruch 1, **dadurch gekennzeichnet, dass** der Durchmesser des ersten Ventilsitzes (36) geringer ist als die Hälfte des Durchmessers des zweiten Ventilsitzes (27).

9. Ventilanordnung nach Anspruch 1, **dadurch gekennzeichnet, dass** der Ventilsitz (36) des ersten Ventils (2) eine glatte Fläche ist.

10. Ventilanordnung nach Anspruch 1, **dadurch gekennzeichnet, dass** dem ersten Ventilverschlussglied (37) eine an einem Metallkörper (33) ausgebildete Notdichtfläche (46) zugeordnet ist.

11. Ventilanordnung nach Anspruch 1, **dadurch gekennzeichnet, dass** das zweite Ventilverschlussglied (29) eine Dichtung (31) mit federnder Dichtlippe aufweist.

12. Ventilanordnung nach Anspruch 1, **dadurch gekennzeichnet, dass** das erste Ventilverschlussglied (37) mit dem zweiten Ventilverschlussglied (29) über eine Rasteinrichtung (49) verbunden ist.

## Claims

1. Valve arrangement, in particular for gas flows,
with a valve housing (17), in which a first smaller valve closing member (37) and a second larger valve closing member (29) are arranged, which together with corresponding valve seats (36, 28) form valves (2, 3) arranged to act parallel to one another,
with a drive means (4), which is connected to the first valve closing member (37) in a manner free from play or with a lower play and to the second valve closing member (29) with a greater play, which corresponds to the stroke of the first valve closing member (37),
with a closing spring (51), which is supported at one end on the second valve closing member (29),
**characterised in that**
the drive means (4) is a tension rod magnetic drive, which has a pole section (15) in order to provide the force/path characteristic with an excess initial force elevation,
wherein the pole section (15) has an annular rib (18), which extends onto the shell surface of the armature (12) and has an associated magnetically active annular recess (19) of the armature (12), and
wherein when the valve closing members (37, 29) are closed the recess (19) is arranged in the direct vicinity of the rib (18).

2. Valve arrangement according to Claim 1, **characterised in that** the valve arrangement (1) includes a variable choke means (5), which is arranged downstream of the valves (2, 3).

3. Valve arrangement according to Claim 1, **characterised in that** the choke means (5) is connected to a control means, which causes the choke means (5) to open only after both valves (2, 3) are opened.

4. Valve arrangement according to Claim 1, **characterised in that** the force/path characteristic has a section (23) with a negative gradient.

5. Valve arrangement according to Claim 1, **characterised in that** the valve closing members (37, 29) are arranged coaxially to one another.

6. Valve arrangement according to Claim 1, **characterised in that** the valve seat (36) of the first valve (2) is arranged on the second valve closing member (29).

7. Valve arrangement according to Claim 1, **characterised in that** the diameter of the first valve closing member (27) is smaller than half the diameter of the second valve closing member (29).

8. Valve arrangement according to Claim 1, **characterised in that** the diameter of the first valve closing member (36) is smaller than half the diameter of the second valve seat (27).

9. Valve arrangement according to Claim 1, **characterised in that** the valve seat (36) of the first valve (2) is a smooth surface.

10. Valve arrangement according to Claim 1, **characterised in that** the first valve closing member (37) has an associated emergency sealing surface (46) configured on a metal body (33).

11. Valve arrangement according to Claim 1, **characterised in that** the second valve closing member (29) has a gasket (31) with a resilient sealing lip.

12. Valve arrangement according to Claim 1, **characterised in that** the first valve closing member (37) is connected to the second valve closing member (29) via a catch means (49).

## Revendications

1. Système de soupape, notamment pour des flux de gaz, comprenant
un corps de soupape (17) dans lequel sont disposés un premier organe formant obturateur de soupape (37) plus petit et un deuxième organe formant obturateur de soupape (29) plus grand, qui constituent avec des sièges de soupape (36, 28) correspondants des soupapes (2, 3) disposées de manière à agir en parallèle,
un dispositif d'entraînement (4) qui est relié sans jeu ou avec un faible jeu au premier obturateur de soupape (37) et est relié au deuxième obturateur de soupape (29) avec un jeu plus important qui correspond à la course du premier obturateur de soupape (37),
un ressort de fermeture (51) dont une extrémité est en appui sur le deuxième obturateur de soupape (29),
**caractérisé par le fait que** le dispositif d'entraînement (4) est un système d'entraînement magnétique à armature de traction qui présente une pièce polaire (15) pour conférer une élévation de force initiale à la caractéristique force-distance, la pièce polaire (15) présentant une nervure (18) annulaire qui s'étend en direction de l'enveloppe de l'armature (12) et à laquelle est associé un évidement (19) annulaire à action magnétique de l'armature (12), et l'évidement (19) étant disposé à proximité immédiate de la nervure (18) lorsque les obturateurs de soupape (37, 29) sont fermés.

2. Système de soupape selon la revendication 1, **caractérisé par le fait que** le système de soupape (1) comprend un dispositif d'étranglement (5) variable qui est placé en aval-des soupapes (2, 3).

3. Système de soupape selon la revendication 1, **caractérisé par le fait que** le dispositif d'étranglement (5) est relié à un dispositif de commande qui opère l'ouverture du dispositif d'étranglement (5), seulement après l'ouverture des deux soupapes (2, 3).

4. Système de soupape selon la revendication 1, **caractérisé par le fait que** la caractéristique force-distance présente une portion (23) à pente négative.

5. Système de soupape selon la revendication 1, **caractérisé par le fait que** les obturateurs de soupape (37, 29) sont disposés de manière coaxiale l'un par rapport à l'autre.

6. Système de soupape selon la revendication 1, **caractérisé par le fait que** le siège de soupape (36) de la première soupape (2) est disposé sur le deuxième obturateur de soupape (29).

7. Système de soupape selon la revendication 1, **caractérisé par le fait que** le diamètre du premier obturateur de soupape (37) est inférieur à la moitié du diamètre du deuxième obturateur de soupape (29).

8. Système de soupape selon la revendication 1, **caractérisé par le fait que** le diamètre du premier siège de soupape (36) est inférieur à la moitié du diamètre du deuxième siège de soupape (27).

9. Système de soupape selon la revendication 1, **caractérisé par le fait que** le siège de soupape (36) de la première soupape (2) est une surface lisse.

10. Système de soupape selon la revendication 1, **caractérisé par le fait qu'**une surface d'étanchéité de secours (46), aménagée sur un corps métallique (33), est associée au premier obturateur de soupape (37).

11. Système de soupape selon la revendication 1, **caractérisé par le fait que** le deuxième obturateur de soupape (29) présente un joint d'étanchéité (31) à lèvre élastique.

12. Système de soupape selon la revendication 1, **caractérisé par le fait que** le premier obturateur de soupape (37) est relié au deuxième obturateur de soupape (29) par l'intermédiaire d'un dispositif à encliquetage (49).
